# EUROPEAN PATENT APPLICATION

(11) **EP 4 618 240 A1**
(43) Date of publication of application: **17.09.2025**
(21) Application number: 24196225.7
(22) Date of filing: 23.08.2024
(51) Int. Cl.: H01M 10/613, H01M 10/647, H01M 10/6553, H01M 10/6567, H01M 50/209, H01M 50/507

(54) **BATTERY MODULE**

(30) Priority: 12.03.2024 KR 20240034492
(71) Applicant: SAMSUNG SDI CO., LTD., Giheung-gu Yongin-si, Gyeonggi-do 17084 (KR)
(72) Inventor: JEON, Du Seong, 16678 Suwon-si (KR); CHAE, Hee Dong, 16678 Suwon-si (KR); LEE, Young Jin, 16678 Suwon-si (KR); YEOM, Gil Choun, 16678 Suwon-si (KR); YU, Choong Ho, 16678 Suwon-si (KR)
(74) Representative: Marks & Clerk LLP

(57) **Abstract**

A battery module includes a plurality of battery cells, a busbar in contact with each terminal of the plurality of battery cells, and a first cooler facing the busbar to cool the plurality of battery cells.

## Description

### BACKGROUND

### 1. Field

Aspects of embodiments of the present disclosure relate to a battery module.

### 2. Description of the Related Art

Generally, as the demand for portable electronic products such as notebook computers, video cameras, and portable phones increases rapidly, and commercialization of robots, electric vehicles, and the like begins in earnest, research on high-performance secondary batteries capable of repeated charging and discharging is being actively conducted.

Secondary batteries are widely used for driving or energy storage in not only small devices, such as portable electronic devices, but also in medium to large devices, such as electric vehicles and energy storage systems (ESSs). Particularly, in the case of the medium to large devices, a battery module may be formed in a form in which a plurality of battery cells are electrically connected to each other to increase output power and/or capacity of the battery.

When the battery module is charged and/or discharged, a busbar connecting a terminal and an adjacent terminal of battery cells is usually heated. When a temperature of the battery module rises excessively due to the heating, a lifetime and stability of the battery module can degrade. As such, the terminals of the battery cells and the busbar of the battery module need to be effectively cooled during charging and/or discharging.

The aforementioned information disclosed in this background section is provided for enhancement of understanding of the background technology of the present disclosure, and therefore may contain information that does not constitute the related art.

### SUMMARY

According to an aspect of embodiments of the present disclosure, a battery module is provided in which the cooling performance of a terminal of a battery cell and a busbar connected to the terminal is improved.

According to one or more embodiments, a battery module includes a plurality of battery cells, a busbar in contact with each terminal of the plurality of battery cells, and a first cooler facing the busbar to cool the plurality of battery cells.

The first cooler may include a cooling channel defining a flow path through which cooling water flows, and a cooling plate fixed to the cooling channel and located to overlap the busbar to transfer heat of the busbar to the cooling water.

The cooling channel may include a base to which the cooling plate is fixed, and a cover which covers the base and which is coupled to the base.

The cooling plate may be bonded to the cooling channel, and the cooling plate may be in direct contact with the cooling water to transfer the heat to the cooling water.

The cooling plate may be made of a metal, and the cooling channel may be made of a plastic.

The busbar may include a plurality of busbars, and the cooling plate may include a plurality of cooling plates to correspond one-to-one to the plurality of busbars.

An inlet, through which the cooling water is introduced into the cooling channel, and an outlet, through which the cooling water sequentially passing through the plurality of cooling plates is discharged to an outside of the cooling channel, may be defined in the cooling channel.

The first cooler may further include a protruding part protruding from an inner surface of the cooling channel to generate turbulence in the cooling water flowing in the cooling channel.

The protruding part may include a plurality of protruding parts, and at least one of the plurality of protruding parts may be located between each pair of adjacent cooling plates of the plurality of cooling plates so as not to overlap the plurality of cooling plates.

The first cooler may further include an insulating film attached to an outer surface of the cooling plate, and the cooling water may be non-insulating cooling water.

The first cooler may further include a heat-conducting layer between the insulating film and the busbar and including a heat-conducting material.

The battery module may further include a channel holder which covers the plurality of battery cells and in which an opening is defined to expose the busbar and a periphery portion defining the opening fixedly supports the cooling channel.

The first cooler may further include an insulating heat-conducting layer which is between the cooling plate and the busbar, of which a side surface is in contact with the cooling plate and another side surface is in contact with the busbar, and which includes an insulating heat-conducting material, and the cooling water may be non-insulating cooling water.

The battery module may further include a second cooler located opposite to the first cooler with the plurality of battery cells therebetween to cool the plurality of battery cells.

The second cooler may be in contact with the plurality of battery cells.

At least some of the above and other features of the invention are set out in the claims.

### BRIEF DESCRIPTION OF THE DRAWINGS

The following drawings attached to this specification illustrate some embodiments of the present invention, and further describe aspects and features of the present invention together with the detailed description of the present invention. However, the present invention should not be construed as being limited to the drawings.
FIG. 1 is a schematic perspective view illustrating a configuration of a battery module according to an embodiment of the present disclosure;
FIG. 2 is an exploded schematic perspective view illustrating the configuration of the battery module of FIG. 1;
FIG. 3 is an exploded perspective view illustrating a first cooler of FIG. 2;
FIG. 4 is an enlarged view illustrating a region IV of FIG. 3;
FIG. 5 is a plan view illustrating a bonded state of a cooling plate and a base of a cooling channel of FIG. 3;
FIG. 6 is a bottom view illustrating the bonded state of the cooling plate and the base of the cooling channel of FIG. 3;
FIG. 7 is an enlarged view illustrating the cooling plate, an insulating film, a thermal interface material (TIM), a busbar, and a channel holder of FIG. 3;
FIG. 8 is a cross-sectional view along the line A-A in FIG. 1;
FIG. 9 is a cross-sectional view along the line B-B in FIG. 1;
FIG. 10 is a cross-sectional view illustrating a modified example of FIG. 8, which illustrates a first cooler not including an insulating film;
FIG. 11 is a cross-sectional view illustrating a modified example of FIG. 9, which illustrates a first cooler not including an insulating film;
FIG. 12 is a schematic perspective view illustrating a configuration of a battery module according to another embodiment of the present disclosure; and
FIG. 13 is a cross-sectional view along the line C-C in FIG. 12.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

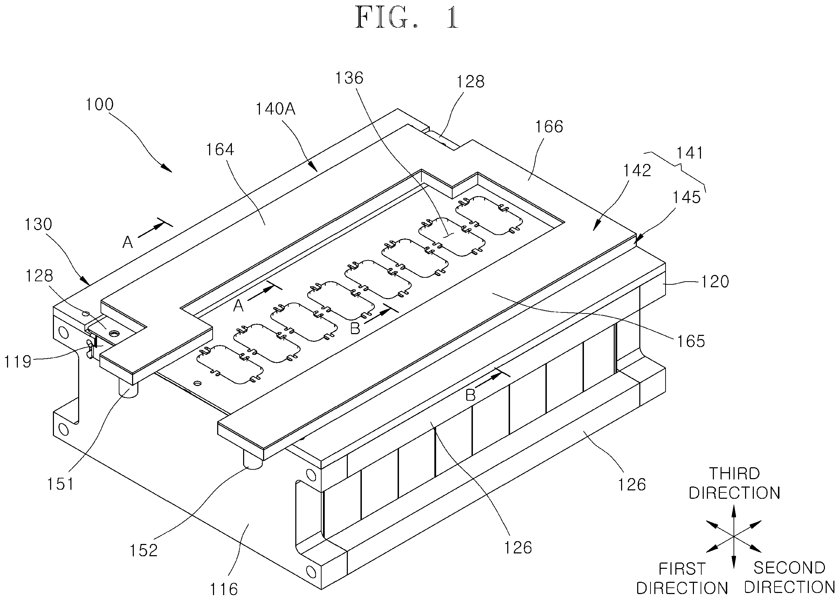

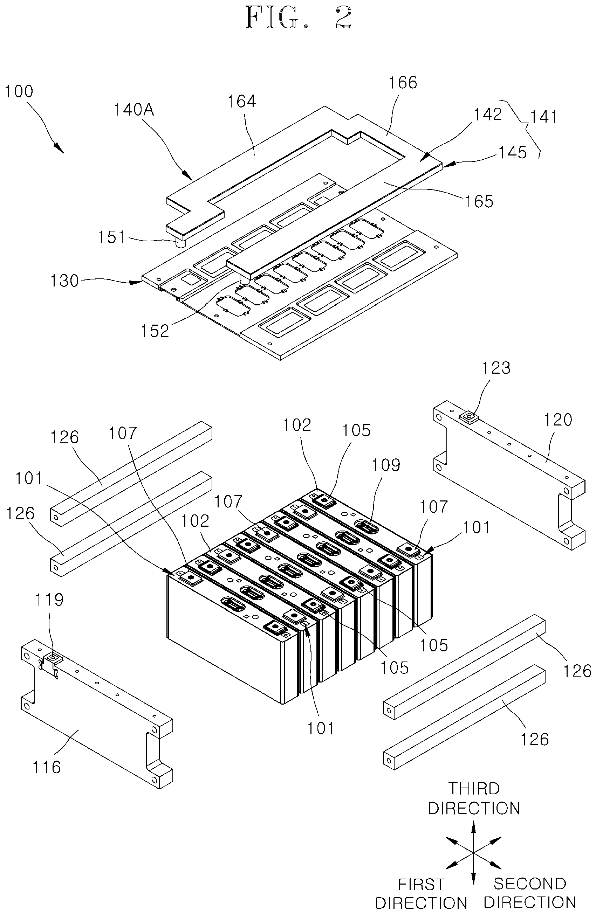

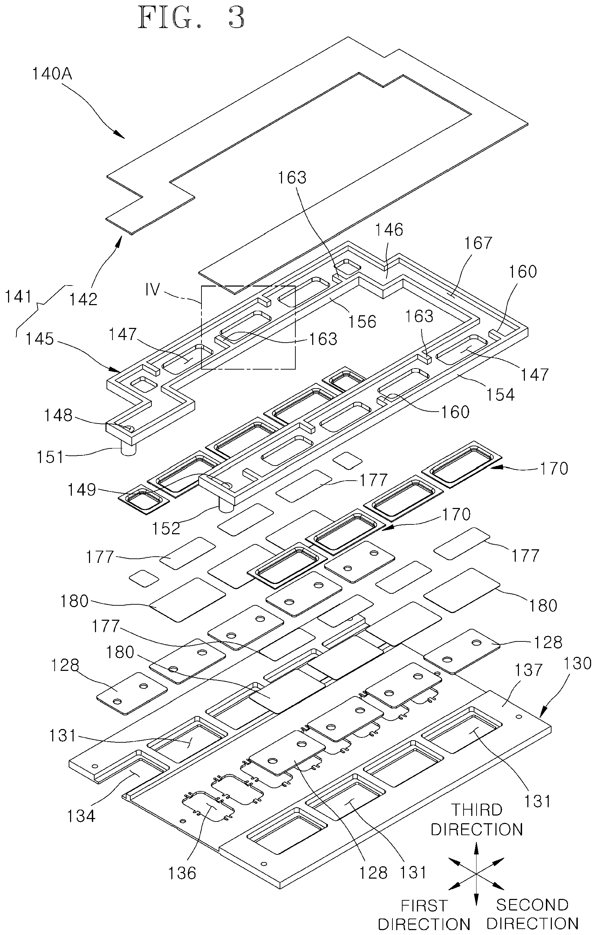

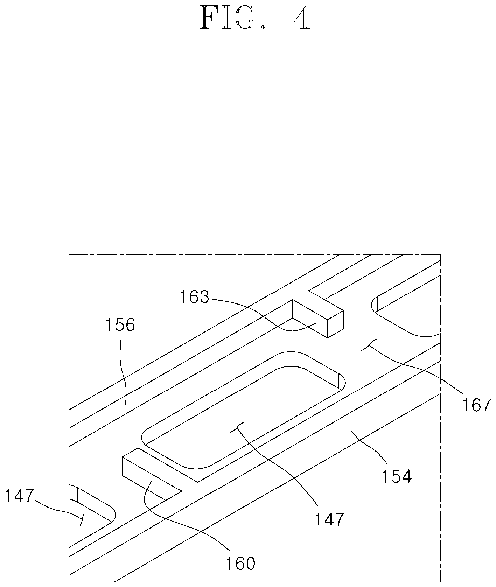

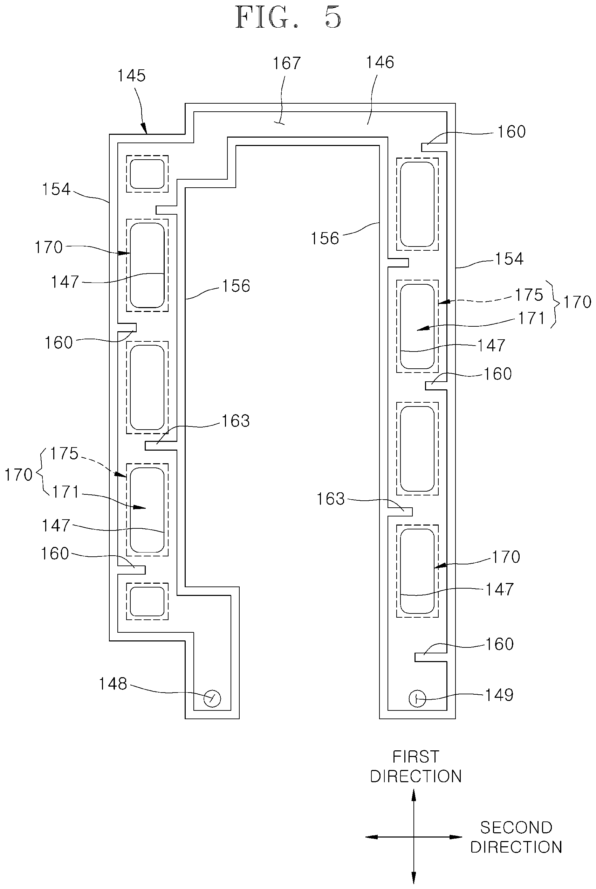

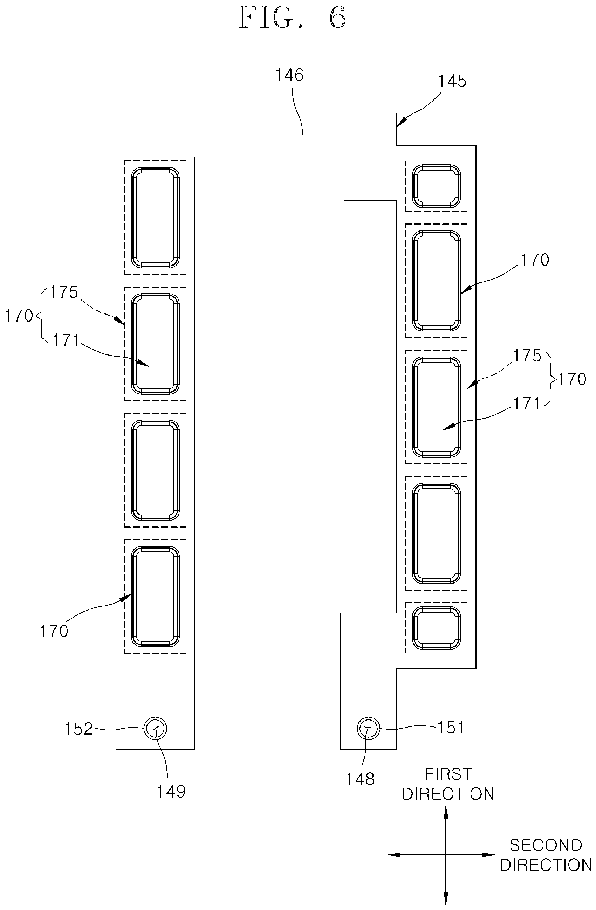

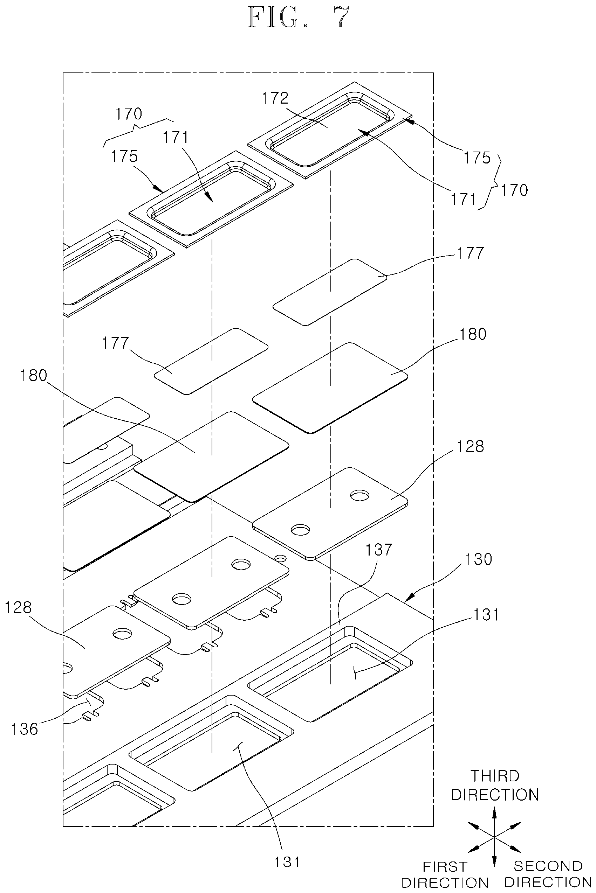

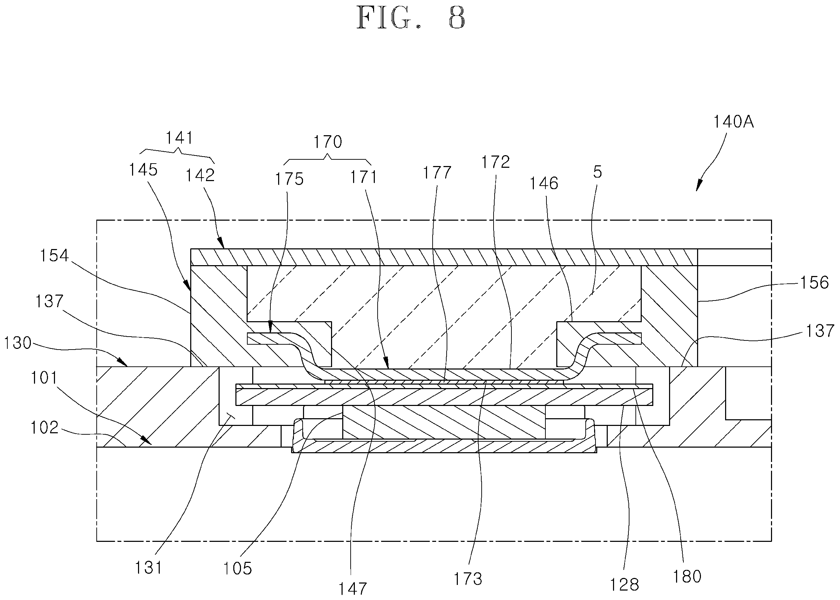

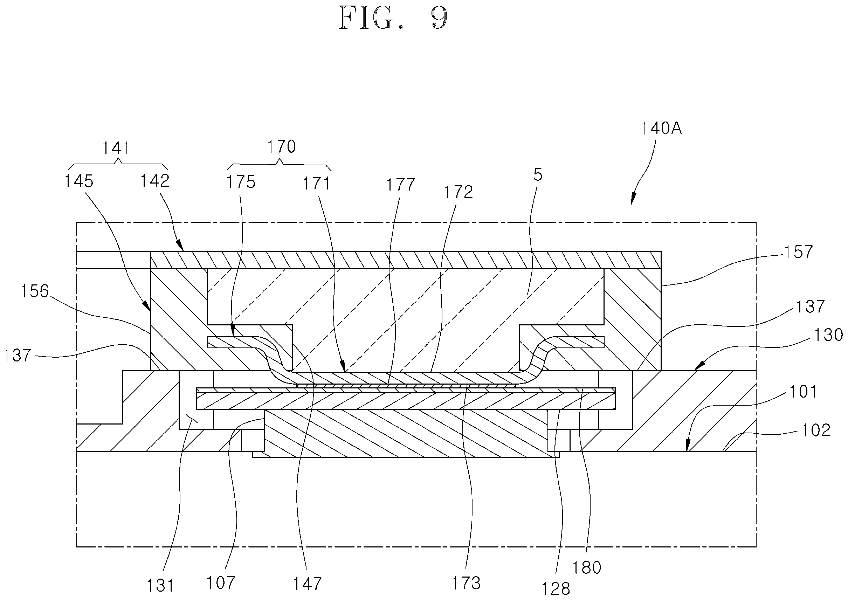

FIG. 1 is a schematic perspective view illustrating a configuration of a battery module according to an embodiment of the present disclosure; and FIG. 2 is an exploded schematic perspective view illustrating the configuration of the battery module of FIG. 1. FIG. 3 is an exploded perspective view illustrating a first cooler of FIG. 2; and FIG. 4 is an enlarged view illustrating a region IV of FIG. 3. FIG. 5 is a plan view illustrating a bonded state of a cooling plate and a base of a cooling channel of FIG. 3; and FIG. 6 is a bottom view illustrating the bonded state of the cooling plate and the base of the cooling channel of FIG. 3. FIG. 7 is an enlarged view illustrating the cooling plate, an insulating film, a thermal interface material (TIM), a busbar, and a channel holder of FIG. 3; FIG. 8 is a cross-sectional view along the line A-A in FIG. 1; and FIG. 9 is a cross-sectional view along the line B-B in FIG. 1.

Referring to FIGS. 1 to 9, a battery module 100 according to an embodiment of the present disclosure includes a plurality of battery cells 101, busbars 128, and a first cooler 140A. Each of the battery cells 101 is a unit structure for storing and supplying energy in the battery module 100.

Although not illustrated in the drawings, the battery cell 101 may be, for example, a prismatic secondary battery provided with an electrode assembly (not shown), in which a positive electrode plate (not shown) and a negative electrode plate (not shown) are disposed on both sides of a separation membrane (not shown) interposed therebetween, and capable of charging and discharging a certain amount (e.g., a preset amount) of energy.

Each battery cell 101 may include a cell body 102, a positive terminal 105, and a negative terminal 107. The cell body 102 may have a rectangular parallelepiped shape, for example, in which a thickness in a front-rear direction is smaller than a height in a vertical direction and a width in a left-right direction. The positive terminal 105 and the negative terminal 107 may be formed to protrude from the cell body 102 and to be spaced apart from each other. The battery cell 101 may further include a cell vent 109 which is configured to burst to discharge a gas from inside to outside of the cell body 102 when an abnormality, such as a fire, occurs in the cell body 102. The cell vent 109 may be disposed between the positive terminal 105 and the negative terminal 107.

The plurality of battery cells 101 may be disposed in a line in a first direction. As illustrated in FIG. 2, the positive terminals 105 and the negative terminals 107 of the plurality of battery cells 101 may be alternately disposed in the first direction. However, the present disclosure is not limited thereto, and a plurality of positive terminals may be consecutively disposed, and a plurality of negative terminals may be consecutively disposed.

A second direction may be defined as a direction perpendicular to the first direction, and a third direction may be defined as a direction perpendicular to the first direction and the second direction. In an example of the battery module 100, the first direction may be referred to as a thickness direction or the front-rear direction of the battery cell 101. The second direction may be referred to as a width direction or the left-right direction of the battery cell 101. The third direction may be referred to as a height direction or the vertical direction of the battery cell 101.

In an embodiment, the battery module 100 may further include a pair of end frames 116 and 120 and a plurality of side frames 126. An end frame 116 of the pair of end frames 116 and 120 may be disposed to cover or hide a side of the plurality of battery cells 101 in the first direction, and the other end frame 120 of the pair of end frames 116 and 120 may be disposed to cover or hide another side of the plurality of battery cells 101 in the first direction. The battery module 100 may further include a pair of module terminals 119 and 123 installed on upper end portions of the pair of end frames 116 and 120.

The plurality of side frames 126 connect the pair of end frames 116 and 120. In an embodiment, the plurality of side frames 126 may be provided as two pairs of side frames 126. A first pair of side frames 126 of the two pairs of side frames 126 may connect first sides of the pair of end frames 116 and 120 in the first direction, and a second pair of side frames 126 may connect second sides of the pair of end frames 116 and 120 in the first direction.

In an embodiment, an end portion of a side of the side frame 126 in the first direction, the end frame 116, an end portion of another side of the side frame 126 in the first direction, and the end frame 120 may be fastened by fastening members, such as bolts (not shown).

In FIGS. 1 and 2, it is illustrated that the side frame 126 has a horizontal beam shape, but this is an example, and the side frame may have a plate shape as another example. In another example, the side frame may be a member including a plate shaped member and a beam shaped member.

The busbars 128 may be in contact with the terminals 105 and 107 formed on the plurality of battery cells 101. The battery cells 101 include the positive terminals 105 and the negative terminals 107. The busbar 128 may electrically connect a positive terminal 105 and a negative terminal 107 of the plurality of positive terminals 105 and the plurality of negative terminals 107 which are alternately disposed in the first direction. In other words, the busbar 128 may electrically connect the positive terminal 105 of a battery cell 101 and the negative terminal 107 of another battery cell 101 of a pair of adjacent battery cells 101 included in the battery module 100.

However, unlike the battery module 100 illustrated in FIG. 2, which is connected in series, a battery module may include a plurality of battery cells connected by busbars in parallel. In this case, positive terminals and negative terminals of the plurality of battery cells may not be alternately disposed in the first direction.

In an embodiment, the busbar 128 may be a plate shaped member, a portion of the busbar 128 may be bent downward to be in contact with the positive terminal 105, and another portion thereof may be bent downward to be in contact with the negative terminal 107. The busbar 128 may be provided as a plurality of busbars 128. One of the plurality of busbars 128 may electrically connect a front module terminal 119 and the terminal 107 of the battery cell 101 disposed at a frontmost side. Another of the plurality of busbars 128 may electrically connect a rear module terminal 123 and the terminal 105 of the battery cell 101 disposed at a rearmost side.

The first cooler 140A is disposed to face the busbars 128 and cools the plurality of battery cells 101. The first cooler 140A may be disposed on the plurality of busbars 128. In an embodiment, the first cooler 140A may include a cooling channel 141, a plurality of cooling plates 170, a plurality of protruding parts 160 and 163, a plurality of insulating films 177, and a plurality of heat-conducting layers 180.

The cooling channel 141 may form a flow path 167 through which cooling water 5 flows. An inlet 148 through which the cooling water 5 is introduced into the cooling channel 141 and an outlet 149 through which the cooling water 5 sequentially passing through the plurality of cooling plates 170 is discharged to the outside of the cooling channel 141 may be formed in the cooling channel 141.

The cooling channel 141 may include a first channel part 164 and a second channel part 165 which extend in the first direction and are spaced apart from each other by a connecting channel part 166 which connects the first channel part 164 and the second channel part 165 to allow a fluid to flow therebetween.

The inlet 148 may be formed at a location in the first channel part 164 to be spaced away from the connecting channel part 166, and the outlet 149 may be formed at a location in the second channel part 165 to be spaced away from the connecting channel part 166. Accordingly, the cooling water 5 may be introduced into the cooling channel 141 through the inlet 148 and sequentially cool the plurality of terminals 105 and 107 that are arranged to be overlapped by the first channel part 164 from a first (front) side to a second (back) side of the of the battery module 100 in the first direction.

In addition, the cooling water 5 may pass through the connecting channel part 166, sequentially to cool the plurality of terminals 105 and 107 arranged to be overlapped by the second channel part 165 in a direction opposite to the first direction, and to be discharged through the outlet 149.

The cooling channel 141 may include a base 145 and a cover 142. The plurality of cooling plates 170 may be fixed to the base 145. The base 145 may include a bottom plate 146 to which the plurality of cooling plates 170 are fixed, an outer wall 154 bent to protrude upward from an outer edge of the bottom plate 146, and an inner wall 156 bent to protrude upward from an inner edge of the bottom plate 146.

The inlet 148 and the outlet 149 may be formed in the bottom plate 146. The bottom plate 146 may include an inlet tube 151 and an outlet tube 152. The inlet tube 151 may extend downward and may be aligned with the inlet 148 such that a cooling water supply line (not shown) may be connected to the inlet 148. The outlet tube 152 may extend downward and may be aligned with the outlet 149 such that a cooling water discharge line (not shown) may be connected to the outlet 149.

A plurality of heat sink holes 147 may be formed in the bottom plate 146 at locations overlapping the plurality of busbars 128. The base 145 may be formed of a non-conductor or insulator, such as a plastic.

The cover 142 may cover the base 145 to be coupled to the base 145. The cover 142 may block the cooling water 5 from leaking from the flow path 167. The cover 142 may be formed of a non-conductor or insulator, such as a plastic. When both the base 145 and the cover 142 are formed of a plastic, it may be described that the cooling channel 141 is formed of the plastic.

In an embodiment, upper end portions of the outer wall 154 and the inner wall 156 of the base 145 and an outer circumferential edge of the cover 142 may be bonded. The base 145 and the cover 142 may be bonded by, for example, ultrasonic bonding, laser bonding, or application of an adhesive.

The plurality of cooling plates 170 may be fixed to the cooling channel 141. The plurality of cooling plates 170 may be formed of a material, such as a metal, with greater thermal conductivity than the plastic. In an embodiment, a planar shape of each of the cooling plates 170 may be a rectangular shape, for example. Each cooling plate 170 may include a first portion 171, which includes a concavely recessed first surface 172 and a second surface 173 that convexly protrudes toward the busbars 128, and a second portion 175 which surrounds the first portion 171. See Figures 6 to 9.

The second portion 175 may be bonded to the cooling channel 141. The first portion 171 may be aligned with the heat sink hole 147, and the second portion 175 may be bonded to a portion around the heat sink hole 147 of the bottom plate 146.

In an embodiment, for example, the base 145 bonded to the plurality of cooling plates 170 may be manufactured through an insertion injection molding method in which the plurality of cooling plates 170 are fixedly inserted into a mold for injection molding the base 145, and a melted plastic is injected into the mold and cured. In an embodiment, the plurality of cooling plates 170 may be bonded to the base 145 by, for example, ultrasonic bonding, laser bonding, or application of an adhesive instead of the insertion injection molding method.

Since the plurality of heat sink holes 147 are sealed and closed by the plurality of cooling plates 170, the cooling water 5 may not leak to the outside of the cooling channel 141 through the plurality of heat sink holes 147.

In an embodiment, a number of the plurality of cooling plates 170 may be provided to correspond one-to-one to the plurality of busbars 128. The plurality of cooling plates 170 may be located to overlap the plurality of busbars 128 in the third direction to transfer heat of the plurality of busbars 128 to the cooling water 5.

The first portion 171 of each of the cooling plates 170 may be in direct contact with the cooling water 5 flowing in the cooling channel 141 to transfer the heat to the cooling water 5. The first surface 172 of the first portion 171 may be in direct contact with the cooling water 5. Since the first surface 172 of the cooling plate 170 is not exposed to the outside of the cooling channel 141, the first surface 172 may be referred to as an inner surface. By contrast, since the second surface 173 of the cooling plate 170 is exposed to the outside of the cooling channel 141, the second surface 173 may be referred to as an outer surface.

The plurality of protruding parts 160 and 163 may protrude from an inner surface of the cooling channel 141 to generate turbulence of the cooling water 5 flowing in the cooling channel 141. In an embodiment, the protruding parts 160 and 163 may include a plurality of outer wall protruding parts 160 protruding from an inner surface of the outer wall 154 and a plurality of inner wall protruding parts 163 protruding from an inner surface of the inner wall 156.

The plurality of protruding parts 160 and 163 may suddenly reduce a width of the flow path 167 in which the cooling water 5 flows or suddenly change a flow direction of the cooling water 5 to generate a turbulence of the cooling water 5. The turbulence generated in the cooling water 5 may facilitate heat transfer from the cooling plate 170 toward the cooling water 5.

In an embodiment, the plurality of protruding parts 160 and 163 may be disposed not to overlap the plurality of cooling plates 170. At least one of the plurality of protruding parts 160 and 163 may be disposed between each pair of adjacent cooling plates 170 of the plurality of cooling plates 170. In an embodiment, the outer wall protruding parts 160 and the inner wall protruding parts 163 may be alternately arranged in a longitudinal direction (herein the first direction) of the cooling channel 141.

The insulating films 177 are electrically insulating films. The plurality of insulating films 177 may be attached to the second surfaces 173 of the plurality of cooling plates 170. The insulating films 177 may be formed of insulating paper, polycarbonate (PC), polyethylene terephthalate (PET), etc.

A heat-conducting layer 180 may be formed of, for example, a material including a thermal interface material (TIM). For example, the heat-conducting layer 180 may be formed by applying, drying, and curing the TIM in a paste type. However, the heat-conducting layer 180 is not limited to that formed by applying, drying, and curing the TIM in the paste type, and the heat-conducting layer may have a film or sheet type.

Each of the plurality of heat-conducting layers 180 may be interposed between the insulating film 177 and the busbar 128 to facilitate heat transfer from the busbar 128 toward the cooling plate 170. A side surface of the heat-conducting layer 180 may be in direct contact with the busbar 128, and an opposite side surface of the heat-conducting layer 180 may be in direct contact with the insulating film 177.

The cooling water 5 may be non-insulating cooling water. Since a current does not flow between the busbar 128 and the cooling plate 170 due to the insulating film 177, even when the cooling water 5 is the non-insulating cooling water that is relatively cheaper than insulating cooling water, a short circuit may not occur in the battery module 100. Accordingly, an operating cost for a battery device (not shown) including the battery module 100 can be reduced. In this case, the insulating cooling water may be cooling water not including an ionic material with a polarity (e.g. pure water).

The battery module 100 may further include a channel holder 130. The channel holder 130 may be a substantially rectangular plate shaped member, for example, and may be disposed on a plurality of battery bodies 102 to cover the plurality of battery cells 101.

A plurality of openings 131 may be formed in the channel holder 130 to expose the plurality of busbars 128. Periphery portions 137 of the plurality of openings 131 may fixedly support the base 145 of the cooling channel 141.

The channel holder 130 may be fixedly fastened to the pair of end frames 116 and 120 by fastening members, such as bolts (not shown). The cooling channel 141 and the periphery portions 137 of the openings 131 may be bonded by, for example, ultrasonic bonding, laser bonding, or application of an adhesive. In an embodiment, the cooling channel 141 and the periphery portions 137 of the openings 131 may also be fastened by bolts.

In the second direction, a vent hole 136, which is opened such that a gas to be discharged to the outside of the cell body 102 through the cell vent 109 when a fire or abnormality occurs in the cell body 102 is not blocked, may be formed in a central portion of the channel holder 130.

According to the battery module 100, an increase in size of the busbar 128 can be suppressed and also a current capacity can be increased by directly cooling the busbar 128 in contact with the terminals 105 and 107 of the battery cell 101 using the first cooler 140A.

According to the battery module 100, heat of the terminals 105 and 107 and the busbar 128 is quickly dissipated during charging by the first cooler 140A before the heat diffuses into the battery cell 101, and a temperature deviation in the battery cell 101 can be reduced to increase a lifetime of the battery module 100.

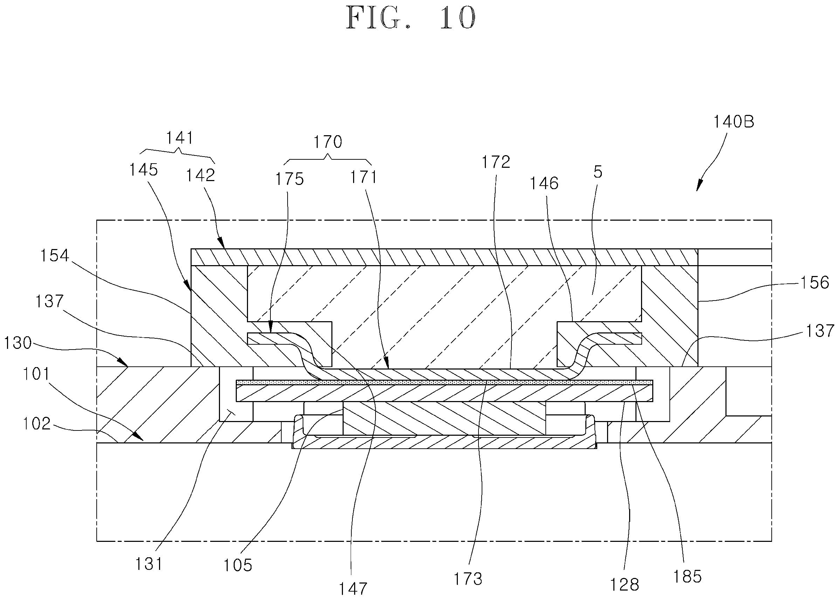

FIG. 10 is a cross-sectional view illustrating a modified example of FIG. 8, which illustrates a first cooler not including an insulating film.

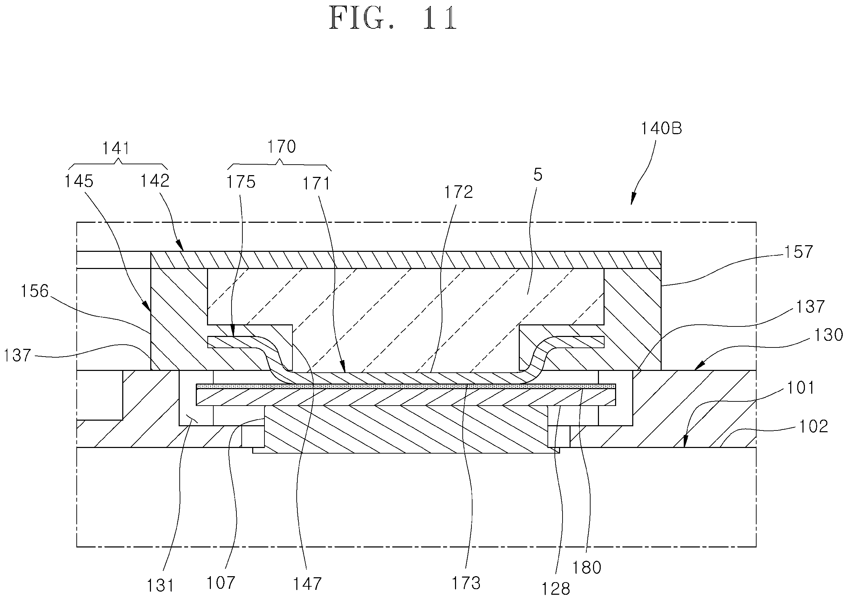

When a first cooler 140B illustrated in FIGS. 10 and 11 is compared to the first cooler 140A illustrated in FIGS. 8 and 9, there is a difference that the first cooler 140B illustrated in FIGS. 10 and 11 does not include the insulating film 177 included in the first cooler 140A illustrated in FIGS. 8 and 9.

In addition, there is a difference that, while an insulating or non-insulating property of the heat-conducting layer 180 of the first cooler 140A illustrated in FIGS. 8 and 9 is not specified, a heat-conducting layer 185 of the first cooler 140B illustrated in FIGS. 10 and 11 is specified as an insulating heat-conducting layer. Accordingly, when the first cooler 140B of FIGS. 10 and 11 is described, the description of components with the same reference numerals as those of FIGS. 8 and 9 will be omitted.

Referring to FIGS. 10 and 11, the insulating heat-conducting layer 185 included in the first cooler 140B may be stacked on a busbar 128, and a second surface 173 of a cooling plate 170 may be in direct contact with the insulating heat-conducting layer 185. The insulating heat-conducting layer 185 may be interposed between the busbar 128 and the cooling plate 170 to facilitate heat transfer from the busbar 128 toward the cooling plate 170.

Cooling water 5 may be non-insulating cooling water. Since a current does not flow between the busbar 128 and the cooling plate 170, which overlap each other, due to the insulating heat-conducting layer 185, even when the cooling water 5 is the non-insulating cooling water that is relatively cheaper than insulating cooling water, a short circuit may not occur in a battery module 100. Accordingly, an operating cost for a battery device (not shown) including the battery module 100 can be reduced. In this case, the insulating cooling water may be cooling water not including an ionic material with a polarity.

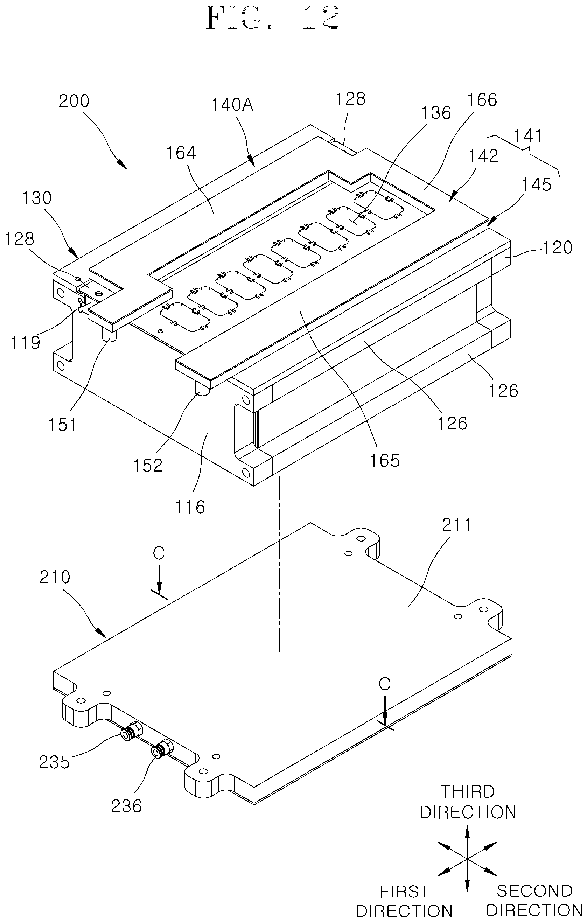

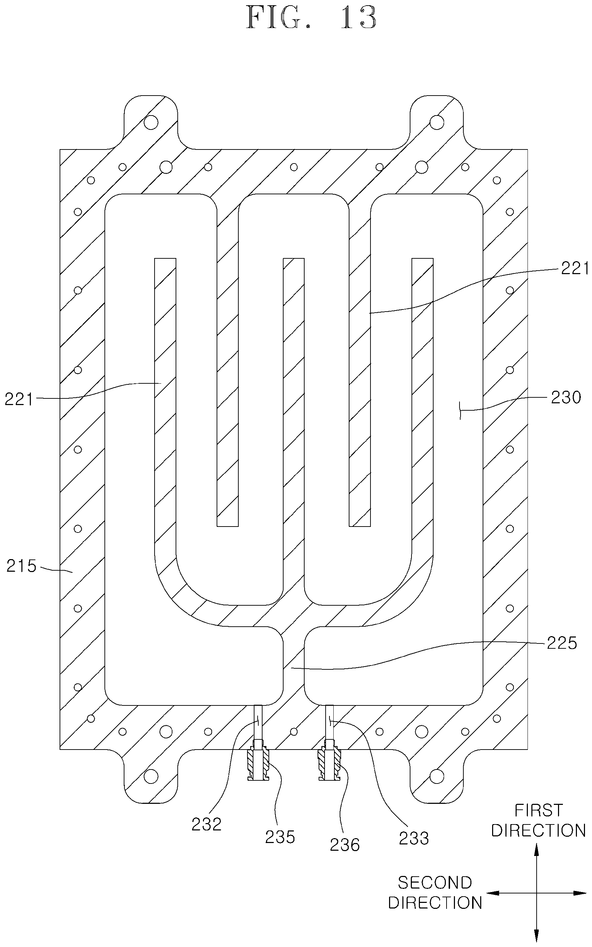

FIG. 12 is a schematic perspective view illustrating a configuration of a battery module according to another embodiment of the present disclosure; and FIG. 13 is a cross-sectional view along the line C-C in FIG. 12. Referring to FIGS. 12 and 13, there is a difference that a battery module 200 according to the present embodiment of the present disclosure further includes a second cooler 210 when compared to the battery module 100 according to the embodiment of the present disclosure illustrated in FIGS. 1 to 9.

Accordingly, when the battery module 200 according to the present embodiment of the present disclosure is described, only the second cooler 210 will be described in detail. The description of the battery module 100 according to the previous embodiment of the present disclosure may be applied to the other components of the battery module 200 according to the present embodiment of the present disclosure without change.

The second cooler 210 is disposed opposite to a first cooler 140A with a plurality of battery cells 101 interposed therebetween to cool the plurality of battery cells 101. Although it is illustrated in FIG. 12 that the second cooler 210 is spaced apart from the plurality of battery cells 101 for the sake of convenience in the description, the second cooler 210 may actually be in contact with the plurality of battery cells 101.

In an embodiment, the second cooler 210 may have a quadrangular plate 211 shape having a certain thickness (e.g., a predetermined thickness), and a flow path 230 through which cooling water flows may be formed in the second cooler 210. The second cooler 210 may be formed of a metal with superior thermal conductivity. An inlet 232 through which the cooling water is introduced into the second cooler 210 and an outlet 233 through which the cooling water is discharged from the inside to the outside of the second cooler 210 may be formed in an outer wall 215 of a side of the second cooler 210.

The second cooler 210 may include the outer wall 215, a flow path forming inner wall 221 protruding from an inner surface of the outer wall 215 to form the flow path 230 of the cooling water as a labyrinth path, and a separation inner wall 225 which blocks the inlet 232 from the outlet 233 to allow the cooling water introduced through the inlet 232 to pass through the flow path 230.

The second cooler 210 may include an inlet tube 235 protruding outward from a side surface to be aligned with the inlet 232, and an outlet tube 236 protruding outward from the side surface to be aligned with the outlet 233. The inlet tube 235 may be connected to a cooling water supply line (not shown), and the outlet tube 236 may be connected to a cooling water discharge line (not shown). The cooling water introduced into the second cooler 210 through the inlet 232 from the cooling water supply line may flow along the flow path 230 to absorb heat from the plurality of battery cells 101 and may be discharged to the cooling water discharge line through the outlet 233.

The effect of the battery module 100 according to the embodiment of FIGS. 1 to 9 was verified through a result that a maximum temperature deviation between locations of the battery cells 101 measured in an experiment of quickly charging the battery module 100 while cooling water is circulating in the first cooler 140A of the battery module 100 according to the embodiment of the present disclosure is less than a maximum temperature deviation between locations of battery cells measured in an experiment of quickly charging a battery module not including a first cooler.

In addition, the effect of the battery module 200 according to the present embodiment of the present disclosure was verified through a result that a maximum temperature deviation between locations of the battery cells 101 measured in an experiment of quickly charging the battery module 200 while cooling water is circulating in the first cooler 140A and the second cooler 210 of the battery module 200 according to the present embodiment of the present disclosure is less than a maximum temperature deviation between locations of battery cells measured in an experiment of quickly charging a battery module not including a first cooler and a second cooler.

According to embodiments of the present disclosure, a busbar in contact with a terminal of a battery cell, which significantly emits heat during charging, is directly cooled by a first cooler, and an increase in size of the busbar can thereby be suppressed, and a current capacity can also be increased.

According to embodiments of the present disclosure, a temperature deviation in a battery cell during charging is reduced, and a lifetime of a battery module can thereby be increased.

However, aspects and features of the present invention are not limited to those described above, and other aspects and features not mentioned will be clearly understood by those skilled in the art from the detailed description provided above.

Although the present invention has been described with reference to some embodiments and drawings illustrating aspects thereof, the present invention is not limited thereto. Various modifications and variations can be made by a person skilled in the art to which the present invention belongs within the scope of the invention and the claims and equivalents thereto.

## Claims

1. A battery module comprising:
a plurality of battery cells;
a busbar in contact with each terminal of the plurality of battery cells; and
a first cooler facing the busbar to cool the plurality of battery cells.

2. The battery module as claimed in claim 1, wherein the first cooler comprises:
a cooling channel defining a flow path through which cooling water flows; and
a cooling plate fixed to the cooling channel and located to overlap the busbar to transfer heat of the busbar to the cooling water.

3. The battery module as claimed in claim 2, wherein the cooling channel comprises:
a base to which the cooling plate is fixed; and
a cover which covers the base and which is coupled to the base.

4. The battery module as claimed in claim 2 or claim 3, wherein
the cooling plate is bonded to the cooling channel, and
the cooling plate is in direct contact with the cooling water to transfer the heat to the cooling water.

5. The battery module as claimed in any one of claims 2 to 4, wherein
the cooling plate is made of a metal, and
the cooling channel is made of a plastic.

6. The battery module as claimed in any one of claims 2 to 5, wherein
the busbar comprises a plurality of busbars, and
the cooling plate comprises a plurality of cooling plates to correspond one-to-one to the plurality of busbars.

7. The battery module as claimed in claim 6, wherein an inlet, through which the cooling water is introduced into the cooling channel, and an outlet, through which the cooling water sequentially passing through the plurality of cooling plates is discharged to an outside of the cooling channel, are formed in the cooling channel.

8. The battery module as claimed in claim 6 or claim 7, wherein the first cooler further comprises a protruding part protruding from an inner surface of the cooling channel to generate turbulence in the cooling water flowing in the cooling channel.

9. The battery module as claimed in claim 8, wherein
the protruding part comprises a plurality of protruding parts, and
at least one of the plurality of protruding parts is located between each pair of adjacent cooling plates of the plurality of cooling plates so as not to overlap the plurality of cooling plates.

10. The battery module as claimed in any one of claims 2 to 9, wherein
the first cooler further comprises an insulating film attached to an outer surface of the cooling plate, and
the cooling water comprises non-insulating cooling water.

11. The battery module as claimed in any one of claims 2 to 9, wherein
the first cooler further comprises an insulating heat-conducting layer which is between the cooling plate and the busbar, of which a side surface is in contact with the cooling plate and another side surface is in contact with the busbar, and which comprises an insulating heat-conducting material; and
the cooling water comprises non-insulating cooling water.

12. The battery module as claimed in claim 10 or claim 11, wherein the first cooler further comprises a heat-conducting layer between the insulating film and the busbar and comprising a heat-conducting material.

13. The battery module as claimed in claim 11 or claim 12, further comprising a channel holder which covers the plurality of battery cells and in which an opening is formed to expose the busbar, and a periphery portion defining the opening fixedly supports the cooling channel.

14. The battery module as claimed in any one of the preceding claims, further comprising a second cooler located opposite to the first cooler with the plurality of battery cells therebetween to cool the plurality of battery cells.

15. The battery module as claimed in claim 14, wherein the second cooler is in contact with the plurality of battery cells.
